# EUROPÄISCHE PATENTSCHRIFT

(11) **EP 1 661 069 B1**
(45) Veröffentlichungstag und Bekanntmachung des Hinweises auf die Patenterteilung: **21.03.2007**
(21) Anmeldenummer: 04763500.8
(22) Anmeldetag: 26.07.2004
(51) Int. Cl.: G06K 19/073, G06F 12/14

(54) **PROZESSORSCHALTUNG UND VERFAHREN ZUM ZUORDNEN EINES LOGIKCHIPS ZU EINEM SPEICHERCHIP**
PROCESSOR CIRCUIT AND METHOD FOR ALLOCATING A LOGIC CHIP TO A MEMORY CHIP
CIRCUIT PROCESSEUR ET PROCEDE D'ATTRIBUTION D'UNE PUCE LOGIQUE A UNE PUCE MEMOIRE

(30) Priorität: 04.09.2003 DE 10340861
(43) Veröffentlichungstag der Anmeldung: 31.05.2006
(73) Patentinhaber: Infineon Technologies AG, 81669 München (DE)
(72) Erfinder: FISCHER, Wieland, 80469 München (DE); SEIFERT, Jean-Pierre, 81669 München-Giesing (DE)
(74) Vertreter: Zinkler, Franz
(86) Internationale Anmeldenummer: PCT/EP2004/008355
(87) Internationale Veröffentlichungsnummer: WO 2005/029402

(56) Entgegenhaltungen:
- EP-A- 0 908 810
- DE-A- 10 200 288
- US-A1- 2001 018 745

## Beschreibung

Die vorliegende Erfindung bezieht sich auf Prozessorschaltungen und insbesondere auf eine Prozessorschaltung mit einem Logikchip und einem Speicherchip.

Insbesondere bei Chipkarten wird üblicherweise ein nicht-flüchtiger Speicher (NVM; NVM = Non Volatile Memory) mit einer CPU-Schaltung auf einem Chip integriert. Dies bedeutet, dass die integrierte Schaltung sowohl einen Speicherbereich mit Speichertransistoren hat, als auch einen Logikbereich mit Logikschaltungen, die die CPU bilden. Typische CPUs bestehen im Kern aus Logikschaltungen, die derart konfiguriert sind, dass sie zum einen die logischen Grundfunktionen und zum anderen höhere Funktionen, wie beispielsweise Addieren, etc. ausführen können. Je nach Anwendung sind die Logikschaltungen ferner konfiguriert, um weitere mathematische Funktionen durchführen zu können. Solchen Logikschaltungen zugeordnet ist ein nicht-flüchtiger Speicher beispielsweise in Form eines EPROMs, EEPROMs oder eines Flash-Speichers. Nicht-flüchtige Speicher sind dahingehend vonnöten, dass sie, im Gegensatz zu Arbeitsspeichern in Form eines RAM-Speichers die gespeicherte Information auch dann behalten, wenn eine Versorgungsspannung abgeklemmt wird. Solche nicht-flüchtigen Speicher werden, wie es bekannt ist, insbesondere dazu benötigt, dass eine Prozessorschaltung sich nach dem Einschalten derselben, also nach dem Versorgen der Prozessorschaltung mit Energie, in einen bestimmten Zustand initialisieren kann. Dies wird in der Technik auch als Hochfahren oder Booten bezeichnet.

Insbesondere für sicherheitsrelevante Anwendungen, jedoch auch dann, wenn sonstige Zugangsbeschränkungen irgendwelcher Art bestehen, wobei diese Zugangsbeschränkungen beispielsweise im nicht-flüchtigen Speicher abgespeichert sind, wenn also generell der Zugriff auf die CPU bzw. Logikschaltung durch in dem NVM gespeicherte Daten geregelt ist, würde ein Angriff auf diese Zugriffsregelung darin bestehen, z. B. den nicht-flüchtigen Speicher zu entfernen, zu löschen oder mit anderen Daten zu beschreiben. Das Entfernen des nicht-flüchtigen Speichers aus der integrierten Schaltung, die sowohl den nicht-flüchtigen Speicher als auch die Logikschaltung umfasst, ist jedoch nicht möglich. Damit kann bei solchen Anwendungen ein Angreifer keine geheimen Daten aus dem nicht-flüchtigen Speicher, nachdem er ihn entfernt hat, auslesen oder verändern. Hierbei ist, neben den genannten Zugriffsbeschränkungsdaten beispielsweise auch der für den Chip vorgesehene Code bzw. insgesamt das Verhalten des Chips von Bedeutung.

Solche integrierte Schaltungen mit eingebettetem nichtflüchtigem Speicher werden insbesondere auf dem Gebiet von Chipkarten verwendet.

Andererseits ist es bekannt, dass die Herstellungsprozesse für Logikschaltungen mit den Herstellungsprozessen für Speicher nicht hundertprozentig kompatibel sind. Dies bedeutet, dass zur Speicherherstellung bestimmte Herstellungsschritte vonnöten sind, die wiederum bewirken, dass keine Logikschaltungen mit maximaler Geschwindigkeit erzeugbar sind. Andererseits werden dann, wenn Logikschaltungen mit maximaler Geschwindigkeit hergestellt werden sollen, Herstellungsschritte vonnöten sein, die wiederum dazu führen, dass die erzeugten Speicher eine geringere Qualität haben bzw. weniger schnell oder weniger dicht gepackt sind. Daher besteht eher der Bedarf darin, Logikchips auf der einen Seite und Speicherchips auf der anderen Seite getrennt voneinander herzustellen und dann auf einem Träger, wie beispielsweise einer PCB (PCB = Printed Circuit Board = gedruckte Schaltungsplatine) zu verbinden, so dass insgesamt eine Schaltung erreicht wird, die zum einen eine hohe Logik-Performance hat, und die zum anderen auch eine hohe Speicher-Performance hat.

Darüber hinaus sei darauf hingewiesen, dass dann, wenn keine Schaltungen produziert werden müssen, die sowohl Logikschaltungen als auch Speicherschaltungen umfassen, Kosteneinsparungen erzielt werden können. So hat sich herausgestellt, dass es grundsätzlich teuerer ist, wie im Falle von Chipkarten sowohl Logikelemente als auch Speicherelemente auf einem Chip zu integrieren. Wesentlich preisgünstiger ist es - besonders wenn Platzanforderungen es erlauben - einerseits Speicherchips und andererseits Logikchips herzustellen, da dann Optimierungen getrennt voneinander im Hinblick auf die Kosten und die erforderliche Leistung für eine bestimmte Anwendung getroffen werden können.

Daher wird es für solche Anwendungen bevorzugt, auf einem Träger wenigstens einen Logikchip und wenigstens einen Speicherchip mit einem nicht-flüchtigen Speicher unterzubringen. Dies führt jedoch dazu, dass ein Angreifer in der Lage ist, den ursprünglichen Speicherchip von dem Träger zu entfernen und durch einen anderen von ihm entsprechend programmierten Speicherchip zu ersetzen.

Bei bestimmten Anwendungen, die nicht ein derart hohes Sicherheitsmaß erfordern, wie es bei Chipkarten der Fall ist, könnte der Angreifer auch bereits dadurch, dass er den Speicherchip löscht, freien Zugang auf eigentlich zugangsbeschränkte Funktionen des Logikchips erhalten. Andererseits könnte ein Angreifer in einem solchen Fall auch durch Löschen des ursprünglichen Speicherchips in der Lage sein, seinen eigenen Code auf dem Chip laufen zu lassen, was wiederum dazu führen könnte, dass er zugangsbeschränkte Funktionen des Chips unerlaubterweise benutzen und möglicherweise ausspionieren kann.

Die DE 10200288 A1 offenbart eine Vorrichtung zum Schutz einer Vorrichtung gegenüber einer unbeabsichtigten Verwendung in einer sicheren Umgebung. So wird ein Chip mit dem Inhalt eines externen Speichers eindeutig verbunden. Hierzu werden ein Anwendungscode und Daten in einem externen Speicher identifiziert und mit einem geheimen Schlüssel verschlüsselt, um das Verschlüsselungsergebnis im externen Speicher zu speichern. Ein Zufallszahlengenerator innerhalb des Chips erzeugt eine Zufallszahl, die gemäß einer Hash-Funktion verarbeitet wird, wobei die Zufallszahl und ihr Hash-Wert mit demselben geheimen Schlüssel verschlüsselt werden, um das Verschlüsselungsergebnis ebenfalls im externen Speicher zu speichern. Zur Verifikation, d.h. zur Überprüfung, ob ein Speicherchip zu einem Logikchip gehört, werden der verschlüsselte Hash-Wert und die verschlüsselte Zufallszahl ausgelesen und mit dem im Speicherchip gespeicherten Schlüssel entschlüsselt. Hierauf wird von der entschlüsselten Zufallszahl ein Hash-Wert gebildet, um dann festzustellen, ob der entschlüsselte Hash-Wert und der gebildete Hash-Wert gleich sind oder nicht.

Die US-Patentveröffentlichung 2001/0018745 A1 offenbart ein sicheres Rechenwerk mit einem virtuellen Speicher sowie einem externen Flash-Eprom. Das Eprom umfasst ein Echtzeit-Betriebssystem (RDOS), das wiederum einen Programmcode hat, der es dem digitalen Medienprozessor ermöglicht, verschiedene Datenströme zu empfangen und zu verarbeiten. Das RDOS umfasst einen Signaturabschnitt. Bei einer Initialisierung des Prozessors wird der Signaturabschnitt des RDOS im Eprom gelesen. Dann wird ein Public-Key des RDOS gelesen. Hierauf wird der Signaturabschnitt des RDOS verifiziert. Damit wird eine Änderung des RDOS in einer Änderung des Signaturabschnitts resultieren, so dass eine Verifikation scheitern würde.

Nach der Verifikation testet das Programm den verifizierten Signaturabschnitt, um zu bestimmen, ob das RDOS sichere Anwendungen unterstützt.

Die Aufgabe der vorliegenden Erfindung besteht darin, ein sicheres Konzept zum Zuordnen eines Logikchips zu einem Speicherchip zu schaffen.

Diese Aufgabe wird durch eine Prozessorschaltung gemäß Patentanspruch 1, ein Verfahren zum Zuordnen eines Logikchips zu einem Speicherchip gemäß Patentanspruch 13, ein Verfahren zum Betreiben einer Prozessorschaltung gemäß Patentanspruch 19 oder ein Computer-Programm gemäß Patentanspruch 22 gelöst.

Der vorliegenden Erfindung liegt die Erkenntnis zugrunde, dass insbesondere für preisgünstige Anwendungen, bei denen eine Integration eines nicht-flüchtigen Speichers mit einem Logikelement z. B. aus Kostengründen nicht erwünscht ist, dennoch eine sichere Zuordnung eines separaten Logikchips zu einem separaten Speicherchip dadurch erreicht werden kann, dass der Logikchip mit einem Speicherbereich versehen wird, der vorzugsweise in Form von elektronischen Sicherungen (Fuses) ausgebildet ist, in denen ein kryptographischer Schlüssel abgespeichert wird. Mit diesem kryptographischen Schlüssel wird eine für den Logikchip eindeutige Identifikationsinformation verschlüsselt, wobei hierzu ein bestimmter kryptographischer Algorithmus eingesetzt werden kann, der je nach Anwendung ein kryptographischer Algorithmus mit hoher Sicherheit ist, wie beispielsweise der DES- oder der RSA-Algorithmus, oder der für andere Anwendungen auch ein ganz einfacher Codierungs-Algorithmus sein kann, welcher abhängig von dem Schlüssel eine bestimmte Codierung verwendet. Die mit dem Schlüssel verschlüsselte Identifikationsinformation des Logikchips wird dann in einem Speicherbereich des nicht-flüchtigen Speichers des Speicherchips abgespeichert, derart, dass eine Zuordnung zwischen Logikchip und Speicherchip geschaffen ist.

Ferner wird es bevorzugt, nach erfolgter Zuordnung der beiden Chips zueinander, also nach einer erfolgten Personalisierung des Logikchips dem Speicherchip gegenüber eine Personalisierungsinformation in dem Speicherbereich des Logikchips abzuspeichern, die signalisiert, dass diesem Logikchip ein Speicherchip zugeordnet worden ist, d. h. dass der Logikchip einem Speicherchip gegenüber personalisiert worden ist. Hierzu wird es ebenfalls bevorzugt, eine oder mehrere noch freie elektronische Sicherungen (Fuses) zu nehmen, um nach erfolgter Personalisierung in dem Fuse-Bereich des Logikchips sowohl den Schlüssel als auch die Personalisierungsinformation irreversibel bzw. zumindest nicht-flüchtig zu speichern.

Beim Hochfahren des Logikchips bzw. bevor der Logikchip auf Informationen von dem Speicherchip zugreift, wird der in dem Speicherbereich des Logikchips abgespeicherte Schlüssel ausgelesen. Hierauf wird die Identifikations-Information des Logikchips mit diesem Schlüssel verschlüsselt, um eine verschlüsselte Identifikationsinformation zu erhalten, welche schließlich mit der verschlüsselten Identifikationsinformation in dem nicht-flüchtigen Speicherbereich des Speicherchips verglichen wird. Stellt diese Verifikation fest, dass die beiden Daten übereinstimmen, so bedeutet dies, dass der richtige Speicherchip dem Logikchip zugeordnet ist. Wird jedoch festgestellt, dass die beim Hochfahren des Logikchips erzeugte verschlüsselte Identifikationsinformation nicht mit einer entsprechenden Informationen übereinstimmt, so kann darauf geschlossen werden, dass der Speicherchip manipuliert worden ist, fehlerhaft ist oder bewusst oder unbewusst gelöscht worden ist. In allen diesen Fällen wird der Logikchip seinen normalen Dienst verweigern und eine Maßnahme treffen, wie beispielsweise einen Security-Reset.

In dem Fall, in dem im Speicherbereich des Logikchips ferner eine Personalisierungsinformation abgespeichert ist, die anzeigt, dass diesem Logikchip ein Speicherchip zugeordnet worden ist, die also bedeutet, dass der Logikchip personalisiert worden ist, wird es bevorzugt, zunächst die Personalisierungsinformationen abzuprüfen, um die Verifikationsoperation, wie sie vorstehend beschrieben worden ist, erst dann auszulösen, wenn die Personalisierungsinformation anzeigt, dass bereits eine Personalisierung stattgefunden hat.

Wird in diesem Fall festgestellt, dass noch keine Personalisierung stattgefunden hat, so wird das Verfahren dahingehend fortgesetzt, dass überprüft wird, ob der Speicher des Logikchips leer ist. Ist dies der Fall, so kann eine eigene Personalisierungsroutine ausgelöst werden. Wird dagegen festgestellt, dass der Speicher nicht leer ist, so deutet dies darauf hin, dass irgendwo eine Manipulation stattgefunden hat, was wiederum dazu führt, dass eine Sicherheitsmaßnahme stattfindet, um zu entscheiden, ob der Logikchip seine Dienste nunmehr verweigert oder im normalen Betrieb oder vielleicht in einem eingeschränkten Betrieb etc. fortfährt.

Die vorliegende Erfindung ist dahingehend vorteilhaft, dass eine sichere und einfache Zuordnung eines Logikchip zu einem Speicherchip auch für nicht-spezialisierte Anwendungen, wie beispielsweise Chipkarten, erreicht wird.

Ein weiterer Vorteil der vorliegenden Erfindung besteht darin, dass eine Prozessorschaltung erfindungsgemäß dahingehend einerseits sehr leistungsfähig und andererseits preisgünstig ist, da Logikschaltungen und Speicherschaltungen nicht, aus Sicherheitsgründen, auf ein und demselben Chip integriert werden müssen, sondern dass für die getrennten Schaltungen getrennte im Hinblick auf Kosten und Leistung optimierte Prozesse verwendet werden können, ohne dass Abstriche im Hinblick auf die sichere Zuordnung dieser beiden Chips zueinander hingenommen werden müssen.

Ein weiterer Vorteil der vorliegenden Erfindung besteht darin, dass die Zuordnung einfach erreicht werden kann, da nur ein geringer Aufwand nötig ist, der zudem bereits in der Fabrik, in der die gedruckten Schaltungsplatinen mit Logikchip und Speicherchip hergestellt werden, durchgeführt werden kann, ohne dass hierzu Kunden bzw. Servicetechniker bemüht werden müssen.

Ein weiterer Vorteil der vorliegenden Erfindung besteht darin, dass insbesondere dann, wenn der Schlüssel und gegebenenfalls die Personalisierungsinformation im Logikchip unter Verwendung von elektronischen Sicherungen eingespeichert werden, überhaupt keine Speicherprozesse etc. nötig sind. Elektronische Sicherungen können sehr preisgünstig hergestellt werden, wobei hierzu für eine Sicherung prinzipiell nur ein einziger Transistor benötigt wird, der dann, wenn er nicht "geschossen" ist, eine erste Information trägt, und der dann, wenn er "geschossen" oder "gebrannt" ist, eine andere Information irreversibel speichert.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild einer erfindungsgemäßen Prozessorschaltung;
- Fig. 2: ein Flußdiagramm zum Darstellen des Verfahrens zum Zuordnen eines Logikchips zu einem Speicherchip;
- Fig. 3: ein Flußdiagramm zum Darstellen des Verfahrens zum Betreiben einer Prozessorschaltung; und
- Fig. 4: ein Flußdiagramm zum Darstellen des Verfahrens zum Betreiben einer Prozessorschaltung gemäß einem bevorzugten Ausführungsbeispiel der vorliegenden Erfindung.

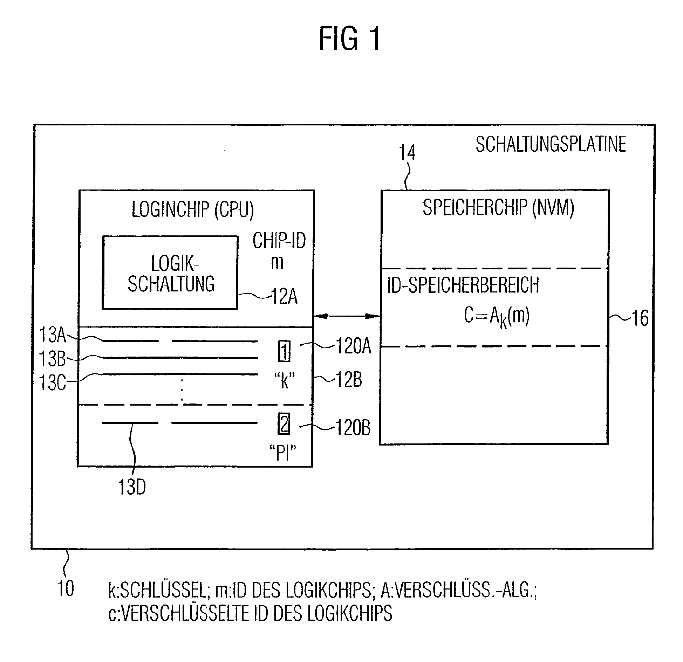

Fig. 1 zeigt eine Übersichtsdarstellung einer Prozessorschaltung gemäß der vorliegenden Erfindung. Die Prozessorschaltung umfasst einen Träger 10, der bei dem bevorzugten Ausführungsbeispiel eine Schaltungsplatine und insbesondere eine gedruckte Schaltungsplatine ist. Auf der Schaltungsplatine sind einerseits ein Logikchip 12 und andererseits ein Speicherchip 14 angebracht. Es sei darauf hingewiesen, dass selbstverständlich mehrere Logikchips bzw. mehrere Speicherchips angeordnet sein können. Der Logikchip 12, der beispielsweise eine CPU sein kann, umfasst einerseits eine Logikschaltung 12a sowie einen nicht-flüchtigen Speicher 12b. Der nicht-flüchtige Speicher 12b ist in einen ersten Teil 120a und in einen zweiten Teil 120b aufgeteilt. In dem ersten Teil 120a ist ein Schlüssel k speicherbar, während in dem zweiten Teil 120b eine Personalisierungsinformation PI speicherbar ist. Vorzugsweise ist der nicht-flüchtige Speicher 12b des Logikchips als Fusing-Block ausgeführt, also als ein Array von einzelnen Fuses 13a, 13b, 13c, 13d. Bei dem in Fig. 1 gezeigten Beispiel sind die Fuses bzw. elektronischen Sicherungen 13a und 13d durchgebrannt bzw. "geschossen", während die Fuses 13b, 13c unverletzt sind. Wie es bekannt ist, werden elektronische Sicherungen irreversibel "programmiert", dahingehend, dass die Sicherungen, um einen ersten logischen Zustand darzustellen, durchgebrannt werden oder, um einen zweiten logischen Zustand darzustellen, der sich von dem ersten logischen Zustand unterscheidet, nicht angetastet werden. So könnte eine Fuse beispielsweise eine einfache Leitung sein, die einen dünnen Abschnitt hat, der durch Anlegen einer hohen Spannung, dahingehend, dass ein hoher Strom durch die Leitung fließt, durchgebrannt werden kann. Alternativ können Fuses auch unter Verwendung eines Transistors ausgeführt werden, wobei als Fuse z. B. die Gate-Source-Strecke des Transistors verwendet werden kann. Bei einem intakten Transistor ist diese Strecke sehr hochohmig. Zum Brennen eines solchen Transistors, also zum Zerstören des Gateoxids zwischen Gate und Source genügt bereits eine hohe Spannung, ohne dass ein hoher Strom fließen muss, derart, dass eine elektronische Sicherung mit einem Transistor im Vergleich zu einer elektronischen Sicherung mit einem dünnen Leiterstück für manche Anwendungen bevorzugt werden dürfte.

Der Speicherchip 14 umfasst einen nicht-flüchtigen Speicher und ist vorzugsweise als Flash-Speicher ausgeführt. Er umfasst einen nicht-flüchtigen Speicherbereich zum Abspeichern einer verschlüsselten Identifikationsinformation des Logikchips. Es sei darauf hingewiesen, dass es bevorzugt wird, die verschlüsselten Identifikationsinformationen an einer vorbestimmten Adresse des Speicherchips 14 bzw. allgemein an einem Platz zu speichern, der dem Logikchip bekannt ist, derart, dass eine Verifikation stattfinden kann, wie sie später noch beschrieben wird.

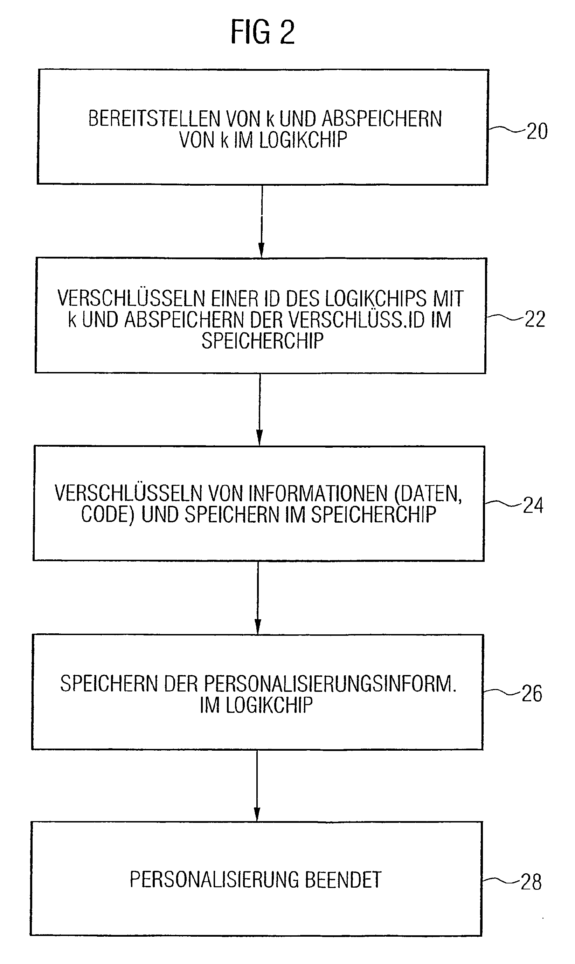

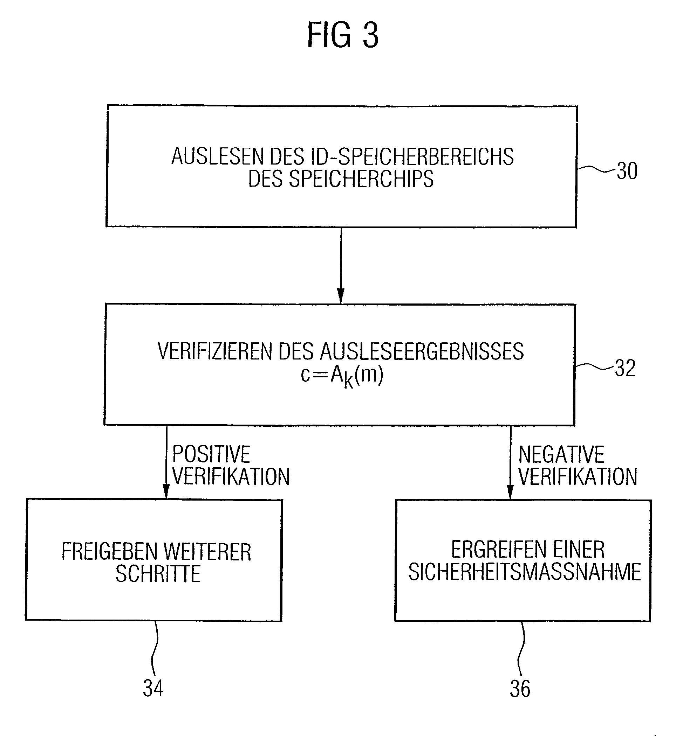

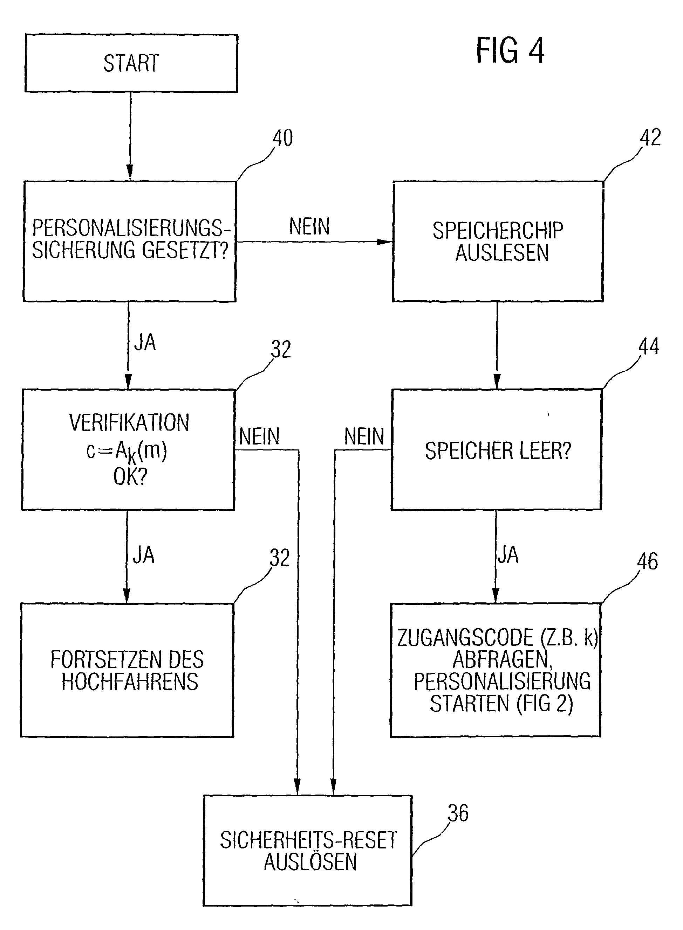

Nachfolgend wird Bezug nehmend auf Fig. 2 eine bevorzugte Vorgehensweise zum Zuordnen eines Logikchips, beispielsweise des Logikchips 12 von Fig. 1 zu einem Speicherchip, beispielsweise des Speicherchips 14 von Fig. 1 anhand von Fig. 2 dargestellt. In einem ersten Schritt 20, der vorzugsweise von dem Logikchip ausgeführt wird, wählt derselbe einen geheimen Schlüssel k. Dieser geheime Schlüssel kann beispielsweise eine echte Zufallszahl sein. Dies ist jedoch nicht unbedingt erforderlich. Hier könnte auch irgendeine deterministisch bestimmte Zahl oder auch eine Pseudozufallszahl verwendet werden. Diese Zahl, also der Schlüssel k, wird dann in dem nicht-flüchtigen Speicher 120a des Logikchips 12 abgespeichert. Ist dieser nicht-flüchtige Speicher als Block von Fuses ausgeführt, so wird der geheime Schlüssel k in den Fuse-Block eingebrannt, wobei es bevorzugt wird, zumindest eine Fuse noch frei zu lassen, da diese, wie später noch ausgeführt werden wird, die Personalisierungsinformation enthält. Bei dem in Fig. 1 gezeigten Beispiel wäre diese im Schritt 20 nicht tangierte Fuse die Fuse 13d.

In einem Schritt, der in Fig. 2 mit 22 bezeichnet ist, wird dann, wieder vorzugsweise durch den Logikchip eine Identifikation m des Logikchips unter Verwendung des Schlüssels k und eines Verschlüsselungsalgorithmus A verschlüsselt, um eine verschlüsselte Identifikation des Logikchips zu erhalten, die mit c bezeichnet ist. Dieser Wert c wird dann in dem Identifikations-Speicherbereich 16 des Speicherchips 14 abgespeichert. Bei einem bevorzugten Ausführungsbeispiel der vorliegenden Erfindung wird es bevorzugt, nicht nur die Identifikation des Logikchips im Speicherchip verschlüsselt abzuspeichern, sondern auch alle anderen Daten oder zumindest einen Teil der im Speicherchip gespeicherten Daten bzw. Codes verschlüsselt abzuspeichern. Hierzu wird in einem Schritt 24 von Fig. 2 eine Verschlüsselung von Informationen, wie beispielsweise Daten oder Code, durchgeführt, um diese verschlüsselten Daten dann in dem Speicherchip 14 abzuspeichern. Es sei darauf hingewiesen, dass zum Verschlüsseln der in dem Speicherchip abzuspeichernden Nutzdaten derselbe Schlüssel k verwendet werden kann. Es kann jedoch auch ein anderer Schlüssel verwendet werden, wie beispielsweise die Identifikation des Logikchips oder z. B. ein Teil der Identifikationsinformation des Logikchips. Alternativ kann auch irgend ein anderer Schlüssel und irgend ein Verschlüsselungsalgorithmus gewählt werden, so lang Informationen über den gewählten Schlüssel bzw. über den gewählten Algorithmus der CPU bekannt sind, um im Betrieb der Prozessorschaltung die im Speicher verschlüsselten Daten entschlüsseln zu können, um mit denselben arbeiten zu können.

In einem Schritt 26 wird das Personalisierungsverfahren dann dadurch beendet, dass Personalisierungsinformationen im Logikchip abgespeichert werden. Hierzu wird vorzugsweise die bis jetzt noch nicht tangierte letzte Fuse 13d von Fig. 1 verwendet, um dieselbe zu brennen, also in einen bestimmten Zustand zu versetzen. Damit wird signalisiert, dass der Logikchip personalisiert worden ist, was in anderen Worten bedeutet, dass dem Logikchip ein Speicherchip eindeutig zugewiesen worden ist. Dann, nachdem die Personalisierungsinformation beendet worden ist, wird die Beendigung der Personalisierung in einem Schritt 28 festgestellt.

Durch den Logikchip wird somit ein geheimer Schlüssel, beispielsweise eine echte Zufallszahl k, ausgewählt und in den Fuse-Block gebrannt, wobei zumindest ein zusätzliches Fuse-Bit noch nicht verwendet wird. Es sei darauf hingewiesen, dass dies bereits in der Halbleiter-Fabrik durchgeführt werden kann, wobei dann jedoch vor dem tatsächlichen Personalisieren auf der Schaltungsplatine die dem Logikchip zugeordnete Zufallszahl, bzw. der Schlüssel k aus dem Fuse-Block, ausgelesen werden muss, um die entsprechende Verschlüsselung durchzuführen. Das Einspeichern eines Schlüssels in dem Logikchip bereits in der Fabrik selbst ermöglicht es auch, nicht nur einen Fuse-Block zu verwenden, sondern beispielsweise auch einen Nur-Lese-Speicher (ROM), da diese Zahl bereits über eine ROM-Maske für den Chip in dem Logikchip selbst eingespeichert werden kann. Nachdem Logikchips typischerweise auch eine eingespeicherte Identifikationsinformation erhalten, kann das Einspeichern der Zufallszahl im Logikchip auch gleichzeitig mit dem Einspeichern der Logik-ID erfolgen, wobei auch der gleiche Speicherchip, beispielsweise ROM, Fuse, Flash, etc. verwendet werden kann.

Der Logikchip verwendet dann einen Algorithmus A für geheime Schlüssel, um eine bestimmte für den Logikchip L eindeutige Zahl m zu verschlüsseln in c: = Aₖ(m). Diese verschlüsselte für den Logikchip eindeutige Zahl, also die Identifikations-information, wird dann an einen bestimmten festgelegten Platz, nämlich den Bereich 16 des Speicherchips 14 von Fig. 1 geschrieben. Vorzugsweise verschlüsselt der Logikchip dann den gesamten Speicher oder zumindest relevante Teile desselben unter Verwendung des Schlüssels k oder eines anderen Schlüssels und setzt dann die Personalisierung, also die Zuordnung des Logikchips zum Speicherchip fort. Hierauf wird dann das noch verbleibende Fuse-Bit 13d gesetzt, so dass die aus dem Logikchip L und dem Speicherchip M bestehende Chip-Packung miteinander "verkettet" wird.

Nachfolgend wird Bezug nehmend auf Fig. 3 ein Verfahren zum Betreiben der Prozessorschaltung von Fig. 1 gemäß einem bevorzugten Ausführungsbeispiel der vorliegenden Erfindung dargestellt. In einem Schritt 30 wird zunächst der ID-Speicherbereich 16 des Speicherchips ausgelesen, um ein Ausleseergebnis zu erhalten. Hierzu wird eine bestimmte vordefinierte Adresse verwendet, wobei es erwartet wird, dass an dieser Adresse das bei einer Personalisierung eingespeicherte verschlüsselte Identifikationsdatum des Logikchips abgespeichert ist. In einem Schritt 32 wird das durch den Schritt 30 erhaltene Ausleseergebnis verifiziert, und zwar dadurch, dass aus dem Logikchip und insbesondere aus dem ersten Speicherbereich 120a des Logikchips der Schlüssel k ausgelesen wird, dass von dem Logikchip die Chip-Identifikation m ausgelesen wird, dass der Verschlüsselungsalgorithmus festgestellt wird, und dass dann c = Aₖ(m) berechnet wird. Ist diese bei der Verifikation berechnete verschlüsselte Identifikation c gleich der aus dem Speicherchip 14 ausgelesenen Identifikation, so stellt dies eine positive Verifikation dar, was dazu führt, dass weitere Schritte freigegeben werden (34), wie beispielsweise dass das Booten der CPU, die auf dem Logikchip enthalten ist, fortgesetzt wird. Wird dagegen festgestellt, dass die in dem Schritt 32 durchgeführte Verifikation zu einem negativen Ergebnis führt, so wird in einem Schritt 36 eine Sicherheitsmaßnahme ergriffen, wie beispielsweise ein Sicherheits-Reset, ein Trap an das Betriebssystem, eine Ausgabeunterbrechung, eine Fehlermeldung, ein Alarm, etc.

Bei einem bevorzugten Ausführungsbeispiel, bei dem das Personalisierungsinformations-Bit 13d verwendet wird, wird zunächst, wie es in Fig. 4 dargestellt ist, in einem Schritt 40 überprüft, ob die Personalisierungs-Sicherung gesetzt bzw. gebrannt ist oder nicht. Wird diese Frage mit Ja beantwortet, so wird die anhand von Fig. 3 dargestellte Verifikation im Schritt 32 durchgeführt, um abhängig vom Verifikationsergebnis entweder das Hochfahren fortzusetzen (Schritt 32), oder eine Sicherheitsmaßnahme wie beispielsweise einen Sicherheits-Reset auszulösen (Schritt 36). Wird dagegen festgestellt, dass die Personalisierungssicherung nicht gesetzt ist, was darauf hindeutet, dass noch keine Personalisierung eines Speicherchips zu Logikchip stattgefunden hat, so wird in einem Schritt 42 der relevante Speicherchip ausgelesen. Wird in einem Schritt 44 festgestellt, dass der Speicher leer ist, so deutet dies darauf hin, dass der Speicher noch nicht personalisiert worden ist und nunmehr zu personalisieren ist. Dies wird in einem Schritt 46 stattfinden, wobei beispielsweise nach einem Zugangscode gefragt wird, wie beispielsweise dem in dem ersten Speicherbereich 120a des Logikchips gespeicherten Schlüssel k, der dazu benötigt wird, um die anhand von Fig. 2 dargestellten Schritte zur Personalisierung des Speicherchips und des Logikchips durchzuführen.

Wird dagegen festgestellt, dass der Speicher nicht leer ist, so deutet dies darauf hin, dass eine Manipulation sehr wahrscheinlich am Personalisierungsbit des Logikchips durchgeführt worden ist, da definitionsgemäß ein Speicher eines Speicherchips nur dann leer sein kann, wenn gleichzeitig die Personalisierungsinformation eines zugeordneten Logikchips nicht gesetzt ist. Somit führt die Speichel-Überprüfung im Schritt 44 von Fig. 4 dazu, dass dann, wenn ein nicht leerer Speicher festgestellt wird, ebenfalls ein Sicherheits-Reset ausgelöst wird (Schritt 36 von Fig. 4).

Die vorliegende Erfindung ist dahingehend vorteilhaft, dass dann, wenn ein Angreifer den Speicherchip vollständig löscht und den Booting-Prozeß, wie er anhand von Fig. 4 dargestellt ist, startet, das Personalisierungs-Bit dennoch signalisiert, dass der Chip vollständig personalisiert worden ist. Der dann startende Sicherheits-Reset verhindert ein weiteres Eindringen des Angreifers auf der Basis des gelöschten Speichers. In diesem Fall würde nämlich die im Schritt 32 anhand von Fig. 3 dargelegte Verifikation scheitern, da im ID-Speicherbereich lauter Nullen stehen, also keine verschlüsselte Identifikation c. Die Verifikation 32 würde daher ein negatives Ergebnis zur Folge haben, was den Sicherheits-Reset im Schritt 36 auslöst.

Würde dagegen der Angreifer den ursprünglichen Code durch einen anderen Code ersetzen, so würde dies ebenfalls bei der Verifikation auffallen, wenn der Angreifer den ID-Speicherbereich 16 des Speicherchips 14 manipuliert hätte. Würde es einem Angreifer jedoch gelingen, diesen Bereich nicht-manipuliert zu lassen, so würde ihm dies dennoch nicht viel helfen, und zwar, wenn bei einem bevorzugten Ausführungsbeispiel der vorliegenden Erfindung der komplette Inhalt des Speicherchips oder zumindest relevante Teile desselben verschlüsselt sind.

An dieser Stelle sei darauf hingewiesen, dass auch andere Varianten möglich sind. So ist es beispielsweise denkbar, dass ein anderer Schlüssel k' statt des Schlüssels k verwendet wird, um den Inhalt des Speichers M zu verschlüsseln. Dieser Schlüssel k' könnte beispielsweise ein Teil der Chip-ID m sein oder auf andere Art und Weise derart abgeleitet sein, dass er vom Logikchip ermittelt bzw. rekonstruiert werden kann.

Je nach den praktischen Gegebenheiten können die erfindungsgemäßen Verfahren in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt stellt die Erfindung somit ein Computerprogramm mit einem Programmcode zur Durchführen des Verfahrens dar, wenn das Computerprogramm auf einem Computer abläuft.

### Bezugszeichenliste

- 10: Schaltungsplatine
- 12: Logikchip
- 12a: Logikschaltung
- 12b: nicht-flüchtiger Speicherbereich
- 13a: Fuse
- 13b: Fuse
- 13c: Fuse
- 13d: Fuse
- 14: Speicherchip
- 16: Identifikations-Speicherbereich
- 20: Schritt des Bereitstellens
- 22: Schritt des Verschlüsselns einer Identifikation
- 24: Schritt des Verschlüsselns von Informationen
- 26: Schritt des Speicherns der Personalisierungsinformationen
- 28: Personalisierung beendet
- 30: Schritt des Auslesens des Identifikations-Speicherbereichs
- 32: Schritt des Verifizierens
- 34: Schritt des Freigebens
- 36: Schritt des Ergreifens
- 40: Schritt des Untersuchens der Personalisierungsinformationen
- 42: Schritt des Speicherchip-Auslesens
- 44: Schritt des Überprüfens, ob der Speicher leer ist
- 46: Schritt des Zugangscode-Abfragens
- 120a: erster Bereich des nicht-flüchtigen Speichers des Logikchips
- 120b: zweiter Bereich der nicht-flüchtigen Speichers des Logikchips

## Patentansprüche

1. Prozessorschaltung mit folgenden Merkmalen:
einem Logikchip (12) mit einer Logikschaltung (12a) und einem nicht-flüchtigen Speicher (12b);
einem Speicherchip (14) mit einem nicht-flüchtigen Speicher;
wobei der nicht-flüchtige Speicher (12b) des Logikchips einen Speicherbereich (120a) aufweist, in dem ein Schlüssel (k) gespeichert ist, und
wobei der nicht-flüchtige Speicher des Speicherchips (14) einen Identifikations-Speicherbereich (16) hat, in dem eine unter Verwendung des Schlüssels (k) verschlüsselte Identifikation (m) des Logikchips (12) gespeichert ist, und
wobei der nicht-flüchtige Speicher (12b) des Logikchips (12) einen weiteren Speicherbereich hat, in dem eine Personalisierungsinformation (PI) gespeichert ist, die in einem gesetzten Zustand anzeigt, dass der Logikchip (12) und der Speicherchip (14) einander zugeordnet sind, und die in einem ungesetzten Zustand anzeigt, dass der Logikchip keinem Speicherchip zugeordnet ist.

2. Prozessorschaltung nach Anspruch 1, die ferner folgende Merkmale aufweist:
einen Träger (10), auf dem der Logikchip (12) und der Speicherchip (14) angebracht sind.

3. Prozessorschaltung nach einem der vorhergehenden Ansprüche,
bei der der nicht-flüchtige Speicher (12b) des Logikchips einen Block mit einer Mehrzahl von elektronischen Sicherungen (13a, 13b, 13c, 13d) aufweist, die irreversibel programmierbar sind.

4. Prozessorschaltung nach Anspruch 3, bei der zum Speichern der Personalisierungsinformation (PI) in dem nicht-flüchtigen Speicher (12b) des Logikchips (12) zumindest eine elektronische Sicherung (13d) vorgesehen ist.

5. Prozessorschaltung nach einem der vorhergehenden Ansprüche,
bei dem der nicht-flüchtige Speicher des Speicherchips (14) ein nicht-flüchtiger Speicher ist, der nur insgesamt löschbar ist.

6. Prozessorschaltung nach einem der vorhergehenden Ansprüche,
bei dem der nicht-flüchtige Speicher des Speicherchips (14) ein Flash-Speicher ist.

7. Prozessorschaltung nach einem der vorhergehenden Ansprüche,
bei der zumindest ein Teil von Informationen, die in dem Speicherchip (14) gespeichert sind, unter Verwendung eines Speicherschlüssels gespeichert sind, wobei der Speicherschlüssel aus Informationen aus dem Logikchip (12) erzeugbar ist.

8. Prozessorschaltung nach Anspruch 7, bei dem der Speicherschlüssel gleich dem Schlüssel (k) ist oder zumindest teilweise der Identifikation (m) des Logikchips entspricht.

9. Prozessorschaltung nach einem der vorhergehenden Ansprüche,
bei dem der in dem nicht-flüchtigen Speicher (12b) gespeicherte Schlüssel (k) eine Zufallszahl ist.

10. Prozessorschaltung nach einem der vorhergehenden Ansprüche,
bei der der Speicherchip (14) Daten und Code speichert.

11. Prozessorschaltung nach einem der vorhergehenden Ansprüche,
bei der der Logikchip eine CPU umfasst.

12. Prozessorschaltung nach Anspruch 2,
bei der der Träger (10) eine Schaltungsplatine ist.

13. Verfahren zum Zuordnen eines Logikchips (12) mit einer Logikschaltung (12a) und einem nicht-flüchtigen Speicher (12b) zu einem Speicherchip (14) mit einem nicht-flüchtigen Speicher, mit folgenden Schritten:
Bereitstellen (20) eines Schlüssels (k) und Speichern des Schlüssels (k) in dem nicht-flüchtigen Speicher (12b) des Logikchips (12);
Verschlüsseln (22) einer Identifikation (m) des Logikchips (12) unter Verwendung des Schlüssels (k), um eine verschlüsselte Identifikation zu erhalten; und
Speichern der verschlüsselten Identifikation des Logikchips (12) in einem Identifikations-Speicherbereich (16) des nicht-flüchtigen Speichers des Speicherchips (14);
Speichern (26) einer Personalisierungsinformation (PI) in dem nicht-flüchtigen Speicher (12b) des Logikchips (12), wobei die Personalisierungsinformation (PI) in einem-gesetzten Zustand anzeigt, dass der Logikchip (12) und der Speicherchip (14) einander zugeordnet sind, und
wobei die Personalisierungsinformation (PI) in einem ungesetzten Zustand anzeigt, dass der Logikchip keinem Speicherchip zugeordnet ist.

14. Verfahren nach Anspruch 13, bei dem der nicht-flüchtige Speicher (12b), in dem der Schlüssel (k) gespeichert ist, einen Block mit elektronischen Sicherungen (13a, 13b, 13c) aufweist.

15. Verfahren nach einem der Ansprüche 13 bis 14, bei dem der Schritt (26) des Speicherns der Personalisierungsinformation (PI) in dem nicht-flüchtigen Speicher (12b) des Logikchips (12) nach dem Schritt des Verschlüsselns und Speicherns der verschlüsselten Identifikation im Speicherchip (14) ausgeführt wird.

16. Verfahren nach einem der Ansprüche 13 bis 15, das ferner folgende Schritte umfasst:
Verschlüsseln (24) von Informationen unter Verwendung eines Informationsschlüssels, um verschlüsselte Informationen zu erhalten; und
Speichern der verschlüsselten Informationen in dem nicht-flüchtigen Speicher des Speicherchips (14).

17. Verfahren nach Anspruch 16, bei dem der Schritt (26) des Speicherns der Personalisierungsinformation (PI) in dem nicht-flüchtigen Speicher des Logikchips (12) nach dem Speichern der verschlüsselten Informationen ausgeführt wird.

18. Verfahren nach einem der Ansprüche 13 bis 17, bei dem vor dem Schritt des Verschlüsselns (22) der Identifikation der nicht-flüchtige Speicher des Logikchips (12) ausgelesen wird, um festzustellen, ob bereits die Personalisierungsinformation (PI) enthalten ist,
bei dem im Falle einer positiven Antwort der Speicherchip (14) ausgelesen wird (42), und
bei dem in einem Falle, in dem der Speicher leer ist (44), die Schritte des Bereitstellens eines Schlüssels, des Verschlüsselns einer Identifikation und des Speicherns der verschlüsselten Identifikation durchgeführt werden.

19. Verfahren zum Betreiben einer Prozessorschaltung mit einem Logikchip (12) mit einer Logikschaltung (12a) und einem nicht-flüchtigen Speicher (12b) und einem Speicherchip (14) mit einem Identifikations-Speicherbereich (16) und einem weiteren Speicherbereich (120b), mit folgenden Schritten:
Auslesen des Identifikations-Speicherbereichs (16) des Logikchips (14), um ein Ausleseergebnis zu erhalten;
Auslesen des weiteren Speicherbereichs (120b) des nicht-flüchtigen Speichers (12b) des Logikchips (12), um ein Ausleseergebnis zu erhalten;
Feststellen, ob das Ausleseergebnis eine Personalisierungsinformation (PI) aufweist, wobei die Personalisierungsinformation (PI) in einem gesetzten Zustand anzeigt, dass der Logikchip (12) und der Speicherchip (14) einander zugeordnet sind, und wobei die Personalisierungsinformation (PI) in einem ungesetzten Zustand anzeigt, dass der Logikchip keinem Speicherchip zugeordnet ist; und
Verifizieren (32), dass das Ausleseergebnis eine unter Verwendung eines in dem Logikchip gespeicherten Schlüssels verschlüsselte Identifikation (m) des Logikchips ist, nur dann, wenn die Personalisierungsinformation (PI) in einem gesetzten Zustand anzeigt, dass der Logikchip (12) und der Speicherchip (14) einander zugeordnet sind;
bei einem positiven Ergebnis des Schritts des Verifizierens (32), Freigeben (34) von weiteren Schritten, an denen der Logikchip (12) und der Speicherchip (14) beteiligt sind, sonst, Ergreifen (36) einer Sicherheitsmaßnahme.

20. Verfahren nach Anspruch 19, bei dem der Schritt des Verifizierens (32) folgende Schritte aufweist:
Auslesen des Schlüssels (k) aus dem nicht-flüchtigen Speicher (12b) des Logikchips (12);
Erhalten einer unverschlüsselten Identifikation (m) des Logikchips (12);
Verschlüsseln der unverschlüsselten Identifikation mit dem Schlüssel (k), um ein Verschlüsselungsergebnis zu erhalten;
Vergleichen des Verschlüsselungsergebnisses mit dem Ausleseergebnis.

21. Verfahren nach Anspruch 19, bei dem in dem Fall, in dem das Ausleseergebnis die Personalisierungsinformation (PI) in einem nicht gesetzten Zustand aufweist, der nicht-flüchtige Speicher des Speicherchips (14) ausgelesen wird (42), um in einem Fall, in dem der Speicher nicht leer ist (44), eine Sicherheitsmaßnahme zu ergreifen (36).

22. Computerprogramm mit einem Programmcode zum Ausführen des Verfahrens gemäß Patentanspruch 13 oder gemäß Patentanspruch 19, wenn das Computer-Programm auf einem Computer läuft.

## Claims

1. A processor circuit comprising:
a logic chip (12) with a logic circuit (12a) and a non-volatile memory (12b);
a memory chip (14) with a non-volatile memory;
wherein the non-volatile memory (12b) of the logic chip comprises a memory area (120a) wherein a key (k) is stored, and
wherein the non-volatile memory of the memory chip (14) comprises an identification memory area (16) wherein an identification (m) of the logic chip (12) encrypted by using the key (k) is stored, and
wherein the non-volatile memory (12b) of the logic chip (12) comprises a further memory area wherein personalization information (PI) is stored, indicating in a set state that the logic chip (12) and the memory chip (14) are allocated to each other, and indicating in a non-set state that the logic chip is not allocated to a memory chip.

2. The processor circuit according to claim 1, further comprising:
a carrier (10) on which the logic chip (12) and the memory chip (14) are disposed.

3. The processor circuit according to one of the previous claims,
wherein the non-volatile memory (12b) of the logic chip comprises a block with a plurality of electronic fuses (13a, 13b, 13c, 13d) that are programmable in an irreversible way.

4. The processor circuit according to claim 3, wherein at least one electronic fuse (13d) is provided for storing the personalization information (PI) in the non-volatile memory (12b) of the logic chip (12).

5. The processor circuit according to one of the previous claims,
wherein the non-volatile memory of the memory chip (14) is a non-volatile memory, which is only deletable as a whole.

6. The processor circuit according to one of the previous claims,
wherein the non-volatile memory of the memory chip (14) is a flash memory.

7. The processor circuit according to one of the previous claims,
wherein at least part of the information stored in the memory chip (14) is stored by using a storage key, wherein the storage key can be generated from information from the logic chip (12).

8. The processor circuit according to claim 7, wherein the memory key is equal to the key (k) or corresponds at least partly to the identification (m) of the logic chip.

9. The processor circuit according to one of the previous claims,
wherein the key (k) stored in the non-volatile memory (12b) is a random number.

10. The processor circuit according to one of the previous claims,
wherein the memory chip (14) stores data and code.

11. The processor circuit according to one of the previous claims,
wherein the logic chip comprises a CPU.

12. The processor circuit according to claim 2,
wherein the carrier (10) is a circuit board.

13. A method of allocating a logic chip (12) with a logic circuit (12a) and a non-volatile memory (12b) to a memory chip (14) with a non-volatile memory, comprising the steps of:
providing (20) a key (k) and storing the key (k) in the non-volatile memory (12b) of the logic chip (12);
encrypting (22) an identification (m) of the logic chip (12) by using the key (k) to obtain an encrypted identification; and
storing the encrypted identification of the logic chip (12) in an identification memory area (16) of the non-volatile memory of the memory chip (14);
storing (26) personalization information (PI) in the non-volatile memory (12b) of the logic chip (12), wherein the personalization information (PI) indicates in a set state that the logic chip (12) and the memory chip are allocated to each other, and
wherein the personalization information (PI) indicates in a non-set state that the logic chip is not allocated to a memory chip.

14. The method according to claim 13 , wherein the non-volatile memory (12b) wherein the key (k) is stored comprises a block with electronic fuses (13a, 13b, 13c).

15. The method according to one of claims 13 to 14, wherein the step (26) of storing the personalization information (PI) in the non-volatile memory (12b) of the logic chip (12) is performed after the step of encrypting and storing the encrypted identification in the memory chip (14).

16. The method according to one of claims 13 to 15, further comprising the steps of:
encrypting (24) information by using an information key to obtain encrypted information; and
storing the encrypted information in the non-volatile memory of the memory chip (14).

17. The method according to claim 16, wherein the step (26) of storing the personalization information (PI) in the non-volatile memory of the logic chip (12) is performed after storing the encrypted information.

18. The method according to one of claims 13 to 17, wherein the non-volatile memory of the logic chip (12) is read out prior to the step of encrypting (22) the identification in order to determine whether the personalization information (PI) is already included,
wherein in the case of a positive answer the memory chip (14) is read out (42), and
wherein in the case when the memory is empty (44), the steps of providing a key, encrypting an identification and storing the encrypted identification are performed.

19. A method of operating a processor circuit with a logic chip (12) with a logic circuit (12a) and a non-volatile memory (12b) and a memory chip (14) with an identification memory area (16) and a further memory area (120b), comprising the steps of:
reading out the identification memory area (16) of the logic chip (14) to obtain a read-out result;
reading out the further memory area (120b) of the non-volatile memory (12b) of the logic chip (12) to obtain a read-out result;
determining whether the read-out result includes personalization information (PI), wherein the personalization information (PI) indicates in a set state that the logic chip (12) and the memory chip are allocated to each other, and wherein the personalization information (PI) indicates in a non-set state that the logic chip is not allocated to a memory chip; and
verifying (32) that the read-out result is an identification (m) of the logic chip encrypted by using a key stored in the logic chip, only when the personalization information (PI) indicates in a set state that the logic chip (12) and the memory chip (14) are allocated to each other;
with a positive result of the step of verifying (32), enabling (34) further steps, where the logic chip (12) and the memory chip (14) are involved, otherwise taking (36) a security measure.

20. The method according to claim 19, wherein the step of verifying (32) comprises the steps of:
reading out the key (k) from the non-volatile memory (12b) of the logic chip (12);
obtaining an unencrypted identification (m) of the logic chip (12);
encrypting the unencrypted identification with the key (k) to obtain an encryption result;
comparing the encryption result with the read-out result.

21. The method according to claim 19, wherein in the case where the read-out result comprises the personalization information (PI) in a non-set state, the non-volatile memory of the memory chip (14) is read out (42) to take (36) a security measure in a case when the memory is not empty (44).

22. A computer program with a program code for performing the method according to claim 13 or according to claim 19 when the computer program runs on a computer.

## Revendications

1. Circuit de processeur aux caractéristiques suivantes:
une puce de logique (12) avec un circuit logique (12a) et une mémoire non volatile (12b);
une puce de mémoire (14) avec une mémoire non volatile ;
la mémoire non volatile (12b) de la puce de logique présentant une zone de mémoire (120a) dans laquelle est mémorisée une clé (k), et
la mémoire non volatile de la puce de mémoire (14) ayant une zone de mémoire d'identification (16) dans laquelle est mémorisée une identification (m) de la puce de logique (12) cryptée à l'aide de la clé (k), et
la mémoire non volatile (12b) de la puce de logique (12) ayant une autre zone de mémoire dans laquelle est mémorisée une information de personnalisation (PI) qui indique, dans un état réglé, que la puce de logique (12) et la puce de mémoire (14) sont associées l'une à l'autre, et qui indique, dans un état non réglé, que la puce de logique n'est associée à aucune puce de mémoire.

2. Circuit de processeur selon la revendication 1, présentant, par ailleurs, les caractéristiques suivantes :
un support (10) sur lequel sont placées la puce de logique (12) et la puce de mémoire (14).

3. Circuit de processeur selon l'une des revendications précédentes,
dans laquelle la mémoire non volatile (12b) de la puce de logique présente un bloc avec une pluralité de fusibles électroniques (13a, 13b, 13c, 13d) qui sont programmables de manière irréversible.

4. Circuit de processeur selon la revendication 3, dans lequel est prévu, pour la mémorisation de l'information de personnalisation (PI) dans la mémoire non volatile (12b) de la puce de logique (12), au moins un fusible électronique (13d).

5. Circuit de processeur selon l'une des revendications précédentes,
dans lequel la mémoire non volatile de la puce de mémoire (14) est une mémoire non volatile qui ne peut être effacée que dans son entièreté.

6. Circuit de processeur selon l'une des revendications précédentes,
dans laquelle la mémoire non volatile de la puce de mémoire (14) est une mémoire instantanée.

7. Circuit de processeur selon l'une des revendications précédentes,
dans laquelle au moins une partie des informations qui sont mémorisées dans la puce de mémoire (14) sont mémorisées à l'aide d'une clé de mémorisation, la clé de mémorisation pouvant être générée à partir d'informations de la puce de logique (12).

8. Circuit de processeur selon la revendication 7, dans lequel la clé de mémorisation est identique à la clé (k) ou correspond au moins partiellement à l'identification (m) de la puce de logique.

9. Circuit de processeur selon l'une des revendications précédentes,
dans lequel la clé (k) mémorisée dans la mémoire non volatile (12b) est un nombre aléatoire.

10. Circuit de processeur selon l'une des revendications précédentes,
dans lequel la puce de mémoire (14) mémorise des données et un code.

11. Circuit de processeur selon l'une des revendications précédentes,
dans lequel la puce de logique comporte un CPU.

12. Circuit de processeur selon la revendication 2,
dans lequel le support (10) est une plaque à circuit.

13. Procédé pour associer une puce de logique (12) avec un circuit logique (12a) et une mémoire non volatile (12b) à une puce de mémoire (14) avec une mémoire non volatile, aux étapes suivantes consistant à:
préparer (20) une clé (k) et mémoriser la clé (k) dans la mémoire non volatile (12b) de la puce de logique (12);
crypter (22) une identification (m) de la puce de logique (12) à l'aide de la clé (k), pour obtenir une identification cryptée ; et
mémoriser l'identification cryptée de la puce de logique (12) dans une zone de mémoire d'identification (16) de la mémoire non volatile de la puce de mémoire (14) ;
mémoriser (26) une information de personnalisation (PI) dans la mémoire non volatile (12b) de la puce de logique (12), l'information de personnalisation (PI) indiquant, dans un état réglé, que la puce de logique (12) et la puce de mémoire (14) sont associées l'une à l'autre, et
l'information de personnalisation (PI) indiquant, dans un état non réglé, que la puce de logique n'est associée à aucune puce de mémoire.

14. Procédé selon la revendication 13, dans lequel la mémoire non volatile (12b) dans laquelle est mémorisée la clé (k) présente un bloc de fusibles électroniques (13a, 13b, 13c).

15. Procédé selon l'une des revendications 13 à 14, dans lequel l'étape (26) de mémorisation de l'information de personnalisation (PI) dans la mémoire non volatile (12b) de la puce de logique (12) est effectuée après l'étape de cryptage et de mémorisation de l'identification cryptée dans la puce de mémoire (14).

16. Procédé selon l'une des revendications 13 à 15, comportant, par ailleurs, les étapes suivantes consistant à :
crypter (24) les informations à l'aide d'une clé d'information, pour obtenir des informations cryptées ; et
mémoriser les informations cryptées dans la mémoire non volatile de la puce de mémoire (14).

17. Procédé selon la revendication 16, dans lequel l'étape (26) de mémorisation de l'information de personnalisation (PI) dans la mémoire non volatile de la puce de logique (12) est effectuée après la mémorisation des informations cryptées.

18. Procédé selon l'une des revendications 13 à 17, dans lequel, avant l'étape de cryptage (22) de l'identification, la mémoire non volatile de la puce de logique (12) est lue, pour constater si l'information de personnalisation (PI) est déjà contenue,
dans lequel, en cas d'une réponse positive, la puce de mémoire (14) est lue (42), et
dans lequel sont réalisées, au cas où la mémoire est vide (44), les étapes de préparation d'une clé, de cryptage d'une identification et de mémorisation de l'identification cryptée.

19. Procédé pour faire fonctionner un circuit de processeur avec une puce de logique (12) avec un circuit logique (12a) et une mémoire non volatile (12b) et une puce de mémoire (14) avec une zone de mémoire d'identification (16) et une autre zone de mémoire (120b), aux étapes suivantes consistant à :
lire la zone de mémoire d'identification (16) de la puce de logique (14), pour obtenir un résultat de lecture ;
lire l'autre zone de mémoire (120b) de la mémoire non volatile (12b) de la puce de logique (12), pour obtenir un résultat de lecture ;
constater si le résultat de lecture présente une information de personnalisation (PI), l'information de personnalisation (PI) indiquant, dans un état réglé, que la puce de logique (12) et la puce de mémoire (14) sont associées l'une à l'autre, et l'information de personnalisation (PI) indiquant, dans un état non réglé, que la puce de logique n'est associée à aucune puce de mémoire ; et
vérifier (32) si le résultat de lecture n'est une identification (m) de la puce de logique cryptée à l'aide d'une clé mémorisée dans la puce de logique que lorsque l'information de personnalisation (PI) indique, dans un état réglé, que la puce de logique (12) et la puce de mémoire (14) sont associées l'une à l'autre ;
dans le cas d'un résultat positif de l'étape de vérification (32), libérer (34) d'autres étapes auxquelles participent la puce de logique (12) et la puce de mémoire (14), sinon, prendre (36) une mesure de sécurité.

20. Procédé selon la revendication 19, dans lequel l'étape de vérification (32) présente les étapes suivantes :
lire la clé (k) de la mémoire non volatile (12b) de la puce de logique (12);
obtenir une identification (m) non cryptée de la puce de logique (12) ;
crypter l'identification non cryptée par la clé (k), pour obtenir un résultat de cryptage ;
comparer le résultat de cryptage au résultat de lecture.

21. Procédé selon la revendication 19, dans lequel, au cas où le résultat de lecture présente l'information de personnalisation (PI) dans un état non réglé, la mémoire non volatile de la puce de mémoire (14) est lue (42), pour prendre, au cas où la mémoire n'est pas vide (44), une mesure de sécurité (36).

22. Programme d'ordinateur avec un code de programme pour l'exécution du procédé selon la revendication 13 ou selon la revendication 19 lorsque le programme d'ordinateur se déroule sur un ordinateur.
